# EUROPEAN PATENT APPLICATION

(11) **EP 2 873 846 A1**
(43) Date of publication of application: **20.05.2015**
(21) Application number: 13290279.2
(22) Date of filing: 13.11.2013
(51) Int. Cl.: F02M 35/12, F02M 35/10

(54) **Noise attenuation connection arrangement**

(71) Applicant: Mann + Hummel GmbH, 71638 Ludwigsburg (DE)
(72) Inventor: Raimbault, Vincent, 53230 Cosmes (FR); Foulboeuf, Gwenael, 53260 Entrammes (FR)

(57) **Abstract**

The invention relates to a duct connection arrangement (20) of an internal combustion engine, comprising a first duct (21) having one end (211) fitting into an end (221) of a second duct (22), said first duct end (211) carrying air tightening means (214) around its circumference.

According to the invention, said first duct end (211) carries sound insulation means (215) around its circumference.

## Description

### TECHNICAL FIELD

The present invention relates to a technique for noise attenuation for air ducts (or conduits), in particular, but not exclusively, pressurized air ducts in a vehicle.

The invention relates more particularly to an arrangement for coupling two ducts of the air intake system of an internal combustion engine, and reducing noise during operation of the engine.

It notably finds application, but is not limited thereto, in a turbocharged engine of a motor vehicle.

### BACKGROUND OF THE INVENTION

In recent years, steps have been taken to reduce noise generated by the engines of vehicles with the objective of increasing the quietness of the passenger compartment of the vehicles.

An important contribution to automobile noise originates from its air intake system, in particular from its air ducts (also called intake pipes)

In a turbocharged engine for instance, one method to connect two parts, e.g. two air ducts (or pipes), of the air duct system is to fit the end of the first part inside the end of the other part. The connection between these two parts is designed to ensure air tightness.

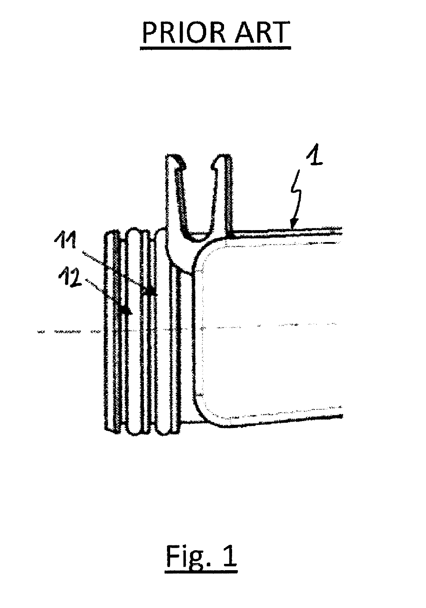

To achieve air tightness, one sealing gasket or two spaced sealing gaskets (i.e. O-rings or toric joints) 11, 12 are mounted on the end of the first duct 1, as illustrated in Figure 1, into two corresponding circumferential grooves.

Although not illustrated, the end of the first duct 1 which carries the sealing gaskets 11, 12 is designed to fit tightly inside an end of a second duct.

A drawback of this assembly is that it does not provide enough acoustic insulation.

In other words, it is not efficient against acoustic leakage.

Also, both parts tend to expand/distort during operation of the engine and such a connection does not provide radial clearance (i.e. (no compensation of tolerances) between the two parts.

In order to improve acoustic insulation, it has been proposed to wrap sound insulating material around the air ducts.

This solution has the problem of being of marginal efficiency and not aesthetically pleasing. It is difficult to assemble and to seal.

It also involves undesirable additional production and assembly costs.

### SUMMARY OF THE INVENTION

The main objective of the present invention is to minimize the emanation of noise from the air intake system of an internal combustion engine during operation of the engine.

In particular, an objective of the invention is to improve the acoustic sealing connection between two ducts or conduits conducting air to an internal combustion engine.

A further objective is to provide such a sealing connection which is reliable, compact, cheap to manufacture and easy to assemble.

The purpose of the present invention is to remedy these drawbacks by proposing a duct connection arrangement of an internal combustion engine, comprising a first duct having one end fitting into an end of a second duct, said first duct end carrying air tightening means around its circumference.

According to the invention, said first duct end also carries sound insulation means around its circumference

Thus, the invention concerns a noise reduction coupling between two parts of an air intake system of a motor vehicle.

The solution of the invention is used to acoustically insulate connections between two parts, i.e. to prevent the occurrence of flow noise (the connection being also air tight).

The invention proposes to secure one or more elements made of acoustic absorption material around the outer wall of a first duct end which is designed to be fitted inside an end of a second duct.

Noise emanating from ducts or conduits used to convey air to an internal combustion engine is thus eliminated, or at least attenuated.

In accordance with another aspect of the present invention, said sound insulation means is in the shape of a strip that is wrapped around the outer wall of said first duct end and bonded to the latter.

In accordance with another aspect of the present invention, said sound insulation means is a circular elastic element that is designed to fit tightly around the outer wall of said first duct end.

In accordance with another aspect of the present invention, said sound insulation means is fitted inside a groove designed in said outer wall of said first duct end, in the assembled state of the ducts.

In accordance with another aspect of the present invention, said sound insulation means are pressed against an inner wall of said second pipe duct.

In accordance with another aspect of the present invention, part of said sound insulation means is not fitted inside the end of said second duct, in the assembled state of the ducts.

In accordance with another aspect of the present invention, said air tightening means are located between said sound insulation means and the outlet of said first duct end.

In accordance with another aspect of the present invention, said sound insulation means are made of foam.

In accordance with another aspect of the present invention, said sound insulation means are made of polyurethane foam.

### BRIEF DESCRIPTION OF THE DRAWINGS

The features of the noise attenuation connection arrangement which is the subject of the invention are described in greater detail by referring to the attached non limiting drawings in which:
Figure 1 shows a schematic partial view of an air duct connection arrangement of the prior art;
Figure 2 is a cross section of an air duct connection arrangement according to an embodiment of the invention.

### DETAILED DESCRIPTION

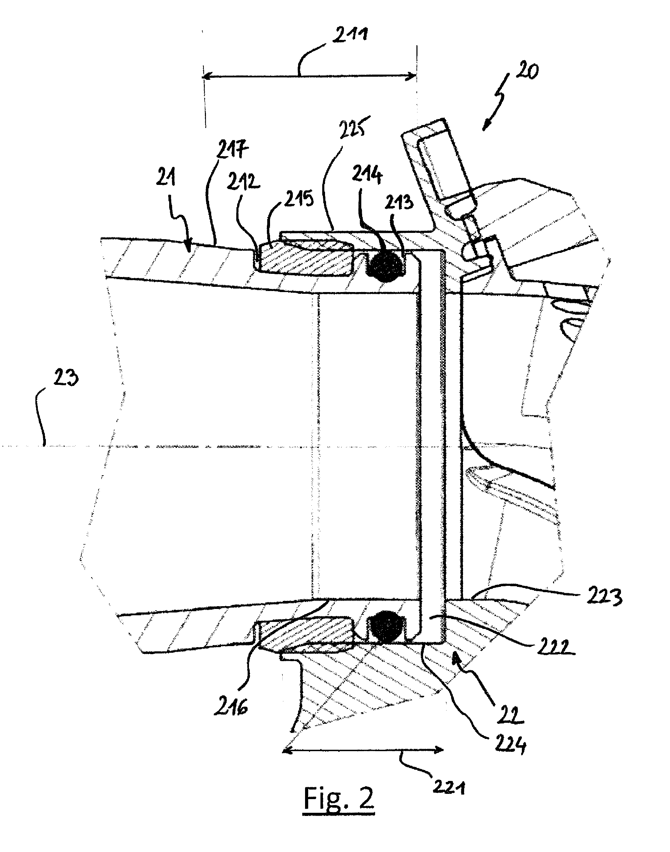

A detailed description of an exemplary embodiment of the invention follows with reference to the figure 2 provided.

In the embodiment described below, the connection arrangement is implemented in a combustion engine provided with a one-stage or two-stage turbocharger.

In such a combustion engine, intake air is directed in an air filter delivering clean air to a compressor of a turbocharger. The compressed air leaving the turbocharger is directed via a first charge air duct through a charge air cooler. The charge air cooler is used to reduce the temperature (and thus increase the density) of the compressed air before the cooled air reaches the air inlet side of the intake manifold plenum via a second charge air duct.

Figure 2 shows a coupling arrangement 20 according to the invention between two ducts, or conduits or pipes, 21, 22 of an air circuit of a motor vehicle engine.

Each duct 21, 22 is shown partially and defines an air passage or conduit allowing the routing of air in an engine of a motor vehicle.

The duct coupling arrangement 20 is designed to connect the intake filter to the turbo compressor or the compressor to the intercooler, for instance. In other words, the noise attenuation connection arrangement, which is the subject of the invention, may be implemented upstream or downstream of the turbo compressor. Thus, the coupling arrangement may be used, but not exclusively, for coupling pressurized gas conduits in a vehicle.

Air duct 21 is an elongate hollow cylindrical tube that is configured to couple at a first end 211 with a first end 221 of air duct 22.

In this example, both ducts 21, 22 are made of plastic and are shown in the assembled state.

The coupling of the duct 21, 22 is achieved by fitting one end 211 of the first air duct 21 inside a cylindrical housing 222 arranged at the first tubular end 221 of air duct 22.

Each duct 21, 22 comprises an inner cylindrical wall 216, 223 respectively located in line with one another when assembled, and an outer wall 217, 225 respectively.

The internal diameter of the cylindrical housing 222, and thus of the hollow tubular end 221, is slightly larger than the outer diameter of the end 211 of duct 21.

The duct coupling arrangement 20 ensures air tightness and noise insulation at the junction of duct ends.

This is achieved by providing a sealing gasket, or O-ring, 214 and an noise reduction element 215 made of sound absorbing material around the circumference of the end 211 of duct 21.

Once the ducts 21, 22 are assembled (i.e. when both ducts 21, 22 are in fluid tight contact as shown in Figure 2), the O-ring 214 and the sound absorbing element 215 are located between the outer wall 217 of the duct end 211 and the inner wall 224 of the cylindrical housing 222, and are pressed against the inner wall 224.

A first groove 213 for the O-ring 214 and a second groove 212 for the sound absorbing element 215 are provided on the outer wall 217 of the duct end 211.

In this embodiment, the O-ring 214 is located closest to the outlet of duct 21 (i.e. it is located between the sound absorbing element 215 and the outlet of duct 21).

As mentioned previously, the noise attenuation means comprise a sound absorbing element 215 intended to reduce air noise levels as the air flows inside the ducts 21, 22.

The sound absorbing element 215 is preferably made of foam, such as polyurethane foam for instance.

In this example, the sound absorbing element 215 is of circular cross-section and fitted concentrically round (over the circumference of) the air duct 21 in the annular or circumferential groove 212.

In one embodiment, the sound absorbing element 215 is in the shape of a strip that is wrapped around the air duct 21 and bonded to the latter.

In another embodiment, the sound absorbing element 215 is a circular elastic element that is designed to fit tightly around the air duct 21.

It is to be noted that the O-ring 214 also contributes to the attenuation of noise, although to a much lesser extent than the sound absorbing element 215. Similarly, the sound absorbing element 215 also contributes to the air sealing of the connection, although to a much lesser extent than the O-ring 214.

The connection arrangement 20 also provides radial clearance between the two ducts 21, 22. Thus, any movement of one duct relative to the other (due to vibrations and/or dilatation) is compensated when the engine is operating.

Thus, during operation, air duct 21 is allowed to rotate with respect to the air duct 22 around longitudinal axis 23.

This also permits easy assembly and disassembly of the connection arrangement 20.

It is also to be noted that the sound absorbing element 215 fits partly inside the air duct 22, when the ducts 21, 22 are assembled. In other words, part of the length of the sound absorbing element 215 is not in contact with the inner wall 224 of the air duct 22, so as to secure the position of the sound absorbing element 215 inside the groove 212 during assembly of both ducts 21, 22.

The solution of the invention thus minimizes acoustic leakage, i.e. the emanation of noise from pipes or conduits conducting air to an internal combustion engine of a vehicle, such as a turbocharged engine, by improving the acoustic sealing connection between two parts.

The solution of the invention can be applied to all types of turbocharged engines.

It is reliable, compact, cheap to manufacture and easy to assemble (and disassemble).

The above embodiments are to be understood as illustrative examples of the invention.

Further embodiments of the invention are envisaged.

In particular, the shape of the ducts and duct ends is not limited to the ones illustrated in Figure 2.

Also, the geometry and dimensions (length, thickness) of the sound absorbing element 215 is not limited to the ones illustrated in Figure 2.

Also, the sound insulating means may comprise more than one element (several foam strips may be juxtaposed for instance). In addition, or alternatively, the air tightening means may comprise more than one element (several air gaskets may be juxtaposed for instance).

It is to be understood that any feature described in relation to one embodiment may also be used in other of the embodiments. Furthermore, equivalents and modifications not described above may also be employed without departing from the scope of the invention, which is defined in the accompanying claims.

Throughout the description and claims of this specification, the words "comprise" and "contain" and variations of them mean "including but not limited to", and they are not intended to (and do not) exclude other components.

## Claims

1. Air duct connection arrangement (20) of an internal combustion engine, comprising a first duct (21) having one end (211) fitting into an end (221) of a second duct (22), said first duct end (211) carrying air tightening means (214) around its circumference, **characterized in that** said first duct end (211) carries sound insulation means (215) around its circumference.

2. Air duct connection arrangement (20) according to claim 1, **characterized in that** said sound insulation means (215) is in the shape of a strip that is wrapped around the outer wall (217) of said first duct end (211) and bonded to the latter.

3. Air duct connection arrangement (20) according to claim 1, **characterized in that** said sound insulation means (215) is a circular elastic element that is designed to fit tightly around the outer wall (217) of said first duct end (211).

4. Air duct connection arrangement (20) according to any one of claims 1 to 3, **characterized in that** said sound insulation means (215) is fitted inside a groove designed in said outer wall (217) of said first duct end (211), in the assembled state of the ducts (21, 22).

5. Air duct connection arrangement (20) according to any one of claims 1 to 4, **characterized in that** said sound insulation means (215) are pressed against an inner wall of said second pipe duct (221).

6. Air duct connection arrangement (20) according to any one of claims 1 to 5, **characterized in that** part of said sound insulation means (215) is not fitted inside the end (221) of said second duct (22), in the assembled state of the ducts (21, 22).

7. Air duct connection arrangement (20) according to any one of claims 1 to 6, **characterized in that** said air tightening means (214) are located between said sound Insulation means (215) and the outlet of said first duct end (211).

8. Air duct connection arrangement (20) according to any one of claims 1 to 7, **characterized in that** said sound insulation means (215) are made of foam.

9. Air duct connection arrangement (20) according to claim 8, **characterized in that** said sound insulation means (215) are made of polyurethane foam.
